# EUROPÄISCHE PATENTSCHRIFT

(11) **EP 1 110 925 B1**
(45) Veröffentlichungstag und Bekanntmachung des Hinweises auf die Patenterteilung: **10.03.2004**
(21) Anmeldenummer: 00127115.4
(22) Anmeldetag: 12.12.2000
(51) Int. Cl.: C04B 38/00, C04B 41/87, B01J 37/02

(54) **Verfahren zum Beschichten eines keramischen Wabenkörpers**
Process for coating a ceramic honeycomb body
Procédé de revêtement d'un corps en nid d'abeilles en céramique

(30) Priorität: 23.12.1999 DE 19962544
(43) Veröffentlichungstag der Anmeldung: 27.06.2001
(73) Patentinhaber: Umicore AG & Co. KG, 63457 Hanau-Wolfgang (DE)
(72) Erfinder: Domesle, Rainer, Dr., 63755 Alzenau-Kälberau (DE); Kreuzer, Thomas, Dr., 61184 Karben (DE); Lox, Egbert, Dr., 63457 Hanau (DE)
(74) Vertreter: Stellbrink, Axel

(56) Entgegenhaltungen:
- EP-A- 0 399 203
- EP-A- 0 941 763

## Beschreibung

Die vorliegende Erfindung betrifft ein Verfahren zum Beschichten eines keramischen Wabenkörpers mit einer Suspension.

Keramische Körper in Wabenform werden in großer Stückzahl auf dem Gebiet der Katalyse - und hier speziell auf dem Gebiet der katalytischen Reinigung von Kraftfahrzeugabgasen - als Tragkörper für katalytisch aktive Beschichtungen eingesetzt. Die Tragkörper besitzen eine allgemein zylindrische Form und werden von zwei Stimflächen und einer Mantelfläche begrenzt. Sie werden von einer Stirnfläche zur anderen von achsenparallelen Kanälen, sogenannten Strömungskanälen, durchzogen, durch die das zu reinigende Abgas geleitet wird. Solche Tragkörper werden auch als Wabenkörper bezeichnet.

Der Katalysator zur Umsetzung der im Abgas enthaltenen Schadstoffe (hauptsächlich Kohlenwasserstoffe, Kohlenmonoxid und Stickoxide) besteht im allgemeinen aus hochoberflächigen Pulvermaterialien, auf denen die eigentlichen katalytisch aktiven Komponenten in hochdisperser Form abgeschieden sind. Dieser Katalysator wird auf die Trennwände zwischen den Strömungskanälen in Form einer Beschichtung aufgebracht. Zur Beschichtung der Trenn- beziehungsweise Kanalwände mit den Pulvermaterialien wird zunächst eine Beschichtungssuspension hergestellt. Hierzu werden die Pulvermaterialien gewöhnlich in Wasser suspendiert. Der Feststoffgehalt (Trockenmasse der Pulvermaterialien) der Suspension liegt je nach Anwendungsfall üblicherweise zwischen 30 und 60 Gew.-%, bezogen auf das Gesamtgewicht der Beschichtungssuspension.

Im Rahmen dieser Erfindung wird das Aufbringen der Beschichtungssuspension auf die Innenflächen der Strömungskanäle als Beschichten des Wabenkörpers bezeichnet. Die hierfür zur Anwendung kommenden Verfahren, wie Tauchen, Übergießen oder Einpumpen der Suspension, sind dem Fachmann bekannt. Genannt seien hier beispielhaft die Patentdokumente GB 1,515,733, US 4,208,454, DE 40 40 150 C2 und DE 198 10 260 A1. Nach Aufbringen der Beschichtung wird sie getrocknet und calciniert.

Die notwendige Beschichtungskonzentration (Trockenmasse des Beschichtungsmaterials pro Liter Wabenkörpervolumen [g/l]) hängt vom Anwendungsfall ab und liegt typischerweise zwischen 50 und 400 g/l. Zur Vermeidung hoher Produktionskosten wird angestrebt, die erforderliche Beschichtungsmenge in einem Arbeitsgang aufzubringen, was die Verwendung entsprechend hoch konzentrierter Beschichtungssuspensionen erforderlich macht.

Ein wesentliches Problem beim Beschichten ist die mögliche Verstopfung der Strömungskanäle mit überschüssigem Beschichtungsmaterial infolge des Saugvermögens der porösen, keramischen Wabenkörper für die flüssige Phase der Beschichtungssuspension und die dadurch bedingte vorzeitige Verfestigung der Suspension in den Strömungskanälen. Um dies zu vermeiden, wird überschüssiges Beschichtungsmaterial im noch feuchten Zustand durch Freisaugen oder Freiblasen aus den Strömungskanälen entfernt. Damit dies mit der notwendigen Sicherheit gelingt, müssen Feststoffgehalt und Viskosität der Beschichtungssuspension auf das Saugvermögen des Wabenkörpers abgestimmt werden.

Die mittleren Schichtdicken der so hergestellten katalytischen Beschichtung liegen im Bereich zwischen etwa 10 und maximal 100 µm, wobei sich über den Querschnitt eines Strömungskanals infolge der beim Beschichten wirkenden Kapillarkräfte starke Schichtdickenunterschiede ergeben können. Im Rahmen der Fertigungstoleranzen sind die mittleren Schichtdicken jedoch über den gesamten Querschnitt des Wabenkörpers gleich, das heißt die mittleren Schichtdicken sind radial homogen verteilt. Durch besondere Maßnahmen beim Beschichten lassen sich radial inhomogene Schichtdickenverteilungen erhalten. So beschreibt die DE 39 12 915 C1 Wabenkörper mit Schichtdicken der katalytischen Beschichtung, die im Zentrum des Wabenkörpers größer sind als am Rand des Wabenkörpers. Diese radiale Inhomogenität wird durch Einsatz entsprechender Blenden beim Beschichten des Wabenkörpers eingestellt.

Die derzeit überwiegend in der Abgaskatalyse eingesetzten keramischen Wabenkörper werden durch Extrusion keramischer Massen hergestellt. Sie haben quadratische oder rechteckige Strömungskanäle mit Zelldichten (Anzahl der Strömungskanäle pro Querschnittsfläche) von 62 cm⁻². Die Dicke der Kanalwände beträgt dabei zirka 0,16 mm. Die einen Wabenkörper begrenzende Mantelfläche kann von gleicher Dicke wie die Kanalwände sein. Gewöhnlich wird die Mantelfläche jedoch zur Erhöhung der mechanischen Stabilität etwas dicker ausgebildet als die Trennwände der Kanäle.

Zur Verbesserung der katalytischen Umsetzungsgrade für die Schadstoffe sind Wabenkörper mit Zelldichten bis 200 cm⁻² und Wandstärken von nur noch 0,1 mm und weniger in der Entwicklung. Diese hochzelligen Wabenkörper stellen eine wesentlich höhere geometrische Oberfläche für die katalytische Beschichtung zur Verfügung und heizen sich auf Grund ihrer geringeren Masse deutlich schneller auf die Betriebstemperatur des Katalysators auf. Beim Beschichten neigen diese hochzelligen Wabenkörper wegen der geringen Kanalquerschnitte zu einer vermehrten Verstopfung der Strömungskanäle. Gemäß der DE 198 10 260 A1 kann dieser Neigung durch gleichmäßiges Befeuchten des gesamten Wabenkörpers vor dem Beschichten entgegengewirkt werden. Dadurch wird schon ein erheblicher Teil des Saugvermögens des Wabenkörpers abgesättigt. Allerdings wird dadurch die erreichbare Beschichtungskonzentration bei Verwendung einer bereits hochkonzentrierten Beschichtungssuspension gegenüber einem unbefeuchteten Wabenkörper in unerwünschter Weise abgesenkt.

Die mechanische Festigkeit der hochzelligen Wabenkörper ist wegen der geringen Wanddicken schlechter als bei den herkömmlichen Wabenkörpern. Zur Erhöhung der mechanischen Festigkeit wird daher versucht, die der Mantelfläche benachbarten äußeren Lagen der Strömungskanäle mit größeren Wanddicken auszurüsten als im Zentrum der Wabenkörper. Solche mit ungleichen Wanddicken ausgerüsteten Wabenkörper werden im folgenden kurz als inhomogene Wabenkörper bezeichnet. Sie werden zum Beispiel in der DE 199 02 540 A1 beschrieben.

Beim Beschichten der Wabenkörper mit der Beschichtungssuspension besteht die schon beschriebene Gefahr der Verstopfung der Strömungskanäle durch Beschichtungsmaterial. Verstopfte Kanäle werden dabei hauptsächlich im Randbereich der Wabenkörper beobachtet. Besonders gilt dies für die beschriebenen inhomogenen Wabenkörper. Aufgabe der vorliegenden Erfindung ist es daher, ein Beschichtungsverfahren anzugeben, welches das Risiko von verstopften Strömungskanälen im Randbereich von Wabenkörpem, insbesondere von inhomogenen Wabenkörpem, vermindert.

Diese Aufgabe wird gelöst durch ein Verfahren zum Beschichten eines keramischen Wabenkörpers mit einer Suspension, welcher eine zylindrische Form mit einer ersten und einer zweiten Stirnfläche und einer Mantelfläche aufweist und der von einer Stirnfläche zur anderen von achsenparallelen Kanälen durchzogen ist, die von Kanalwänden gebildet werden und wobei das Beschichten des Wabenkörpers mit geeigneten Verfahren vorgenommen wird. Das Verfahren ist dadurch gekennzeichnet, dass der Wabenkörper teilweise angefeuchtet und danach beschichtet wird.

Unter Anfeuchten oder Befeuchten wird im Rahmen dieser Erfindung die Belegung des porösen Wabenkörpers mit beliebigen Flüssigkeiten oder Lösungen, vorzugsweise wässriger Natur, verstanden. Die Beschichtung wird stets durch Trocknen und Calcinieren des Wabenkörpers abgeschlossen.

Die Erfindung beruht auf der Erkenntnis, dass auf befeuchteten Wabenkörpern bei Verwendung einer identischen Beschichtungssuspension weniger Beschichtungsmasse abgeschieden werden kann als auf trockenen Wabenkörpem. Bei der vorgeschlagenen nur teilweisen Befeuchtung des Wabenkörpers können daher höhere Beschichtungsmengen abgeschieden werden, wobei in beschichtungsprozessbedingt kritischen Abschnitten des Wabenkörpers Kanalverstopfungen vermieden werden können.

Weiterhin werden durch das vorgeschlagene Verfahren inhomogene Verteilungen der Beschichtungskonzentration zugänglich. Die inhomogene Verteilung kann sowohl über die Länge des Wabenkörpers als auch über seinen Querschnitt an beliebigen Stellen erzeugt werden. Der Grad der Absättigung des Saugvermögens des porösen Wabenkörpers kann vom Fachmann durch das verwendete Flüssigkeitsvolumen und gegebenenfalls durch eine zwischen Anfeuchten und Beschichten eingeschaltete Wartezeit gesteuert werden. Der Grad der Absättigung bestimmt die Menge der abgeschiedenen Beschichtungssuspension und somit der Beschichtungskonzentration auf dem beschichteten Wabenkörper.

Besonders vorteilhaft ist es, die Mantelfläche des Wabenkörpers anzufeuchten. Es wurde nämlich gefunden, dass die Häufung von verstopften Kanälen im Randbereich der Wabenkörper auf die größere Ansammlung von Wabenkörpermaterial infolge des Mantels und das dadurch bedingte, erhöhte Saugvermögen für die flüssige Phase der Suspension hervorgerufen wird. Dies gilt sowohl für Wabenkörper, deren Mantel von derselben Dicke wie die Dicke der Kanalwände ist als auch für Wabenkörper mit einem dickeren Mantel und auch besonders für inhomogene Wabenkörper mit dickeren Kanalwänden im Bereich des Mantels der Wabenkörper.

Erfindungsgemäß wird das Saugvermögen im Bereich des Mantels der Wabenkörper vor dem Beschichten durch eine vorhergehende Anfeuchtung der Mantelfläche des Wabenkörpers zumindest teilweise abgesättigt. Im Gegensatz zu der DE 198 10 260 A1 wird gemäß dieser Ausführungsform des Verfahrens nur an der Mantelfläche des Wabenkörpers angefeuchtet und nicht der gesamte Wabenkörper. Während gemäß der DE 198 10 260 A1 sich die Beschichtungskonzentration durch die gleichmäßige Anfeuchtung des gesamten Wabenkörpers in allen Strömungskanälen vermindert, ist dies nach dem vorgeschlagenen Verfahren nur im Randbereich der Fall. Somit können hohe Beschichtungskonzentrationen mit nur einmaliger Beschichtung bei gleichzeitiger Verminderung von verstopften Kanälen im Randbereich erzielt werden.

Der Grad der Absättigung und die Eindringtiefe der Anfeuchtung kann vom Fachmann durch das verwendete Flüssigkeitsvolumen und gegebenenfalls durch eine zwischen Anfeuchten und Beschichten eingeschaltete Wartezeit gesteuert werden. Hierdurch kann das erhöhte Saugvermögen im Randbereich von Wabenkörpern vermindert oder sogar kompensiert werden. Eine verminderte Verstopfungsneigung der Strömungskanäle in der Randzone der Wabenkörper ist die Folge.

Für das Beschichten der Wabenkörper, das heißt das für das Beschichten der Wandflächen der Strömungskanäle, können alle für die Beschichtung von Wabenkörpern geeigneten Beschichtungsverfahren eingesetzt werden. Zu nennen sind hier beispielsweise das Beschichten des Wabenkörpers durch Tauchen, Übergießen, Einpumpen oder Durchsaugen der Suspension. Hierzu wird die Suspension von einer der beiden Stirnflächen des Wabenkörpers aus den Strömungskanälen zugeführt.

Es können für die Beschichtung wässrige und auch organische, zum Beispiel alkoholische, Suspensionen eingesetzt werden. Das Anfeuchten des Wabenkörpers kann ebenfalls mit Wasser oder einer wässrigen Lösung aber auch mit organischen, mit Wasser mischbaren (zum Beispiel Alkohole) oder nicht mischbaren (zum Beispiel Kohlenwasserstoffe) Flüssigkeiten erfolgen. Bevorzugt wird für das Beschichten eine wässrige Suspension verwendet. Das Anfeuchten des Mantels wird ebenfalls bevorzugt mit Wasser oder einer wässrigen Lösung vorgenommen.

Das vorgeschlagene Beschichtungsverfahren vermindert nicht nur das Risiko einer Verstopfung der Strömungskanäle, sondern kann auch in vorteilhafter Weise für die Ausbildung einer radial inhomogenen Beschichtung im Sinne der eingangs zitierten DE 39 12 915 C1 verwendet werden. Durch die von der Mantelfläche nach innen abnehmende Absättigung des Saugvermögens des Wabenkörpermaterials wird erreicht, dass die Beschichtungsdicke vom Mantel nach innen hin zunimmt. Zur Beeinflussung des radialen Schichtdickenprofils dient neben der Menge der verwendeten Flüssigkeit insbesondere auch die zwischen Befeuchten und Beschichten eingeschaltete Wartezeit. Je größer die Wartezeit gewählt wird, um so weiter kann die Absättigung des Saugvermögens durch die zur Vorbelegung verwendete Flüssigkeit ins Zentrum des Wabenkörpers vordringen. Wird der Wabenkörper dagegen sofort nach dem Befeuchten beschichtet, so wir im wesentlichen nur die Verstopfungsgefahr für die der Mantelfläche benachbarten Strömungskanäle vermindert.

Es besteht auch die Möglichkeit, eine gradientenförmige, beziehungsweise eine stufenförmige Anfeuchtung, anzuwenden, das heißt die Mantelfläche wird längs des Wabenkörpers von der ersten zur zweiten Stirnfläche mit unterschiedlichen Flüssigkeitsmengen (stufen- oder gradientenförmig) pro Flächeneinheit angefeuchtet.

Selbstverständlich besteht auch die Möglichkeit nur einen Teil der Mantelfläche zu befeuchten. Wird zum Beispiel die Hälfte der Mantelfläche halbschalenartig befeuchtet, so wird ein beschichteter Wabenkörper erhalten, der auf einer Hälfte eine zum Zentrum hin ansteigende Schichtdicke der Beschichtung aufweist. Derartig beschichtete Wabenkörper können bei ungleichmäßiger Anströmung des zu reinigenden Gasstromes zu einer erwünschten Vergleichmäßigung der Gasdurchströmung beitragen.

Aber auch bei der sequentiellen Aufbringung von mehreren Katalysatorschichten kann das Verfahren eingesetzt werden. Soll zum Beispiel ein Wabenkörper mit zwei aufeinanderliegende Schichten mit unterschiedlicher katalytischer Wirkung ausgestattet werden, so wird zunächst die erste Schicht aufgebracht. Hierbei kann schon das erfindungsgemäße Verfahren angewendet werden. Die erste Schicht wird getrocknet und zur Fixierung calciniert. Die erste Schicht erhöht das Saugvermögen des Wabenkörpers für die flüssige Phase der Beschichtungssuspension und somit auch die Gefahr der Verstopfung von Strömungskanälen durch das Beschichtungsmaterial der zweiten Schicht im Mantelbereich des Wabenkörpers. Das erfindungsgemäße Verfahren kann somit besonders bei der Aufbringung einer weiteren Schicht auf bereits mindestens schon einmal beschichtete Wabenkörper vorteilhaft eingesetzt werden. Weiterhin kann dem Wunsch nach räumlich unterschiedlicher Beschichtungskonzentration der aufzubringenden Schicht Rechnung getragen werden.

Ein weiteres Einsatzgebiet des vorgeschlagenen Verfahrens ist die Beschichtung von Wabenkörpern mit besonders hohen Beschichtungskonzentrationen in mehreren aufeinanderfolgenden Beschichtungsvorgängen.

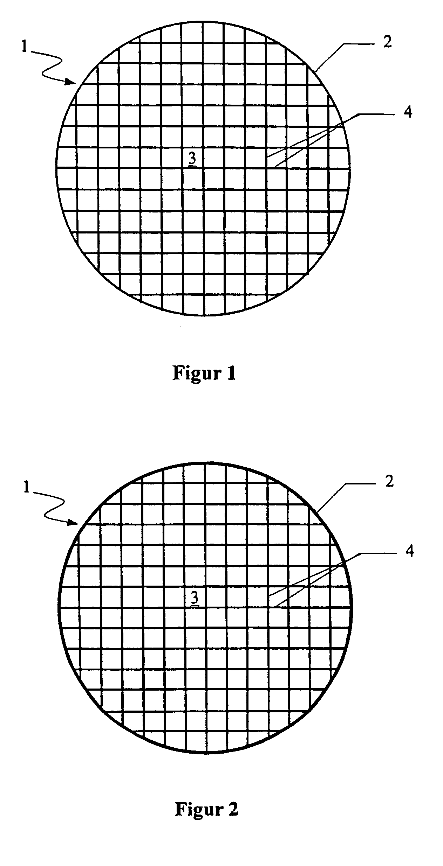

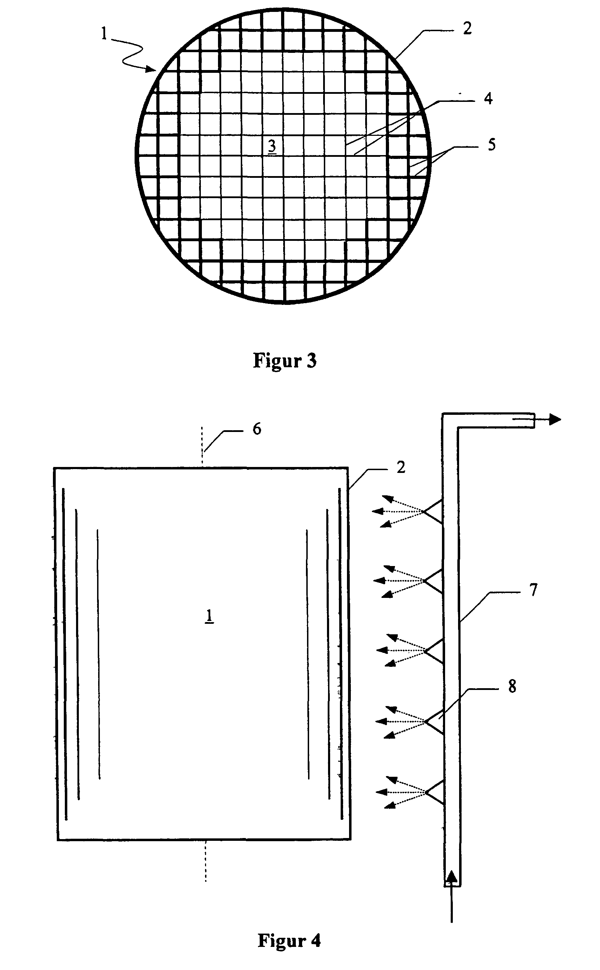

Die Erfindung wird nun an Hand der Figuren 1 und 4 näher erläutert. Es zeigen
- **Figur 1:**: Aufsicht auf die Stirnfläche eines homogenen Wabenkörpers, dessen Mantel dieselbe Dicke wie die Kanalwände aufweist.
- **Figur 2:**: Aufsicht auf die Stirnfläche eines homogenen Wabenkörpers, dessen Mantel eine größere Dicke als die Kanalwände aufweist.
- **Figur 3:**: Aufsicht auf die Stirnfläche eines inhomogenen Wabenkörpers
- **Figur 4:**: Anfeuchten der Mantelfläche eines Wabenkörpers vor dem Beschichten

Die Figuren 1 bis 3 zeigen verschiedene Wabenkörper, jeweils mit kreisförmigem Querschnitt. Figur 1 zeigt einen homogenen Wabenkörper, dessen Mantel dieselbe Dicke wie die Kanalwände aufweist. Als homogen wird ein Wabenkörper im Rahmen dieser Erfindung bezeichnet, wenn die Kanalwände über den gesamten Querschnitt des Wabenkörpers gleiche Dicke aufweisen. Im Gegensatz dazu ist die Dicke der Kanalwände im Randbereich des Querschnittes eines inhomogenen Wabenkörpers gegenüber dem zentralen Bereich verstärkt. In den Figuren 1 bis 3 bezeichnet die Bezugsziffer (1) den Wabenkörper. (2) bezeichnet den Mantel des Wabenkörpers, (3) einen Strömungskanal und (4) die Kanal- beziehungsweise Trennwände zwischen den Strömungskanälen. In den Figuren 1 bis 3 sind Wabenkörper mit quadratischem Querschnitt der Strömungskanäle gezeichnet, die in einem gleichmäßigen Raster über den Querschnitt des Wabenkörpers verteilt sind. Das Verfahren ist jedoch in gleicher Weise auch auf Wabenkörper mit anderen Kanalquerschnitten - rechteckig, dreieckig oder sechseckig - anwendbar.

Figur 2 zeigt einen homogenen Wabenkörper, dessen Mantel eine größere Dicke als die Kanalwände aufweist.

Figur 3 zeigt eine Aufsicht auf eine Stirnfläche eines inhomogenen Wabenkörpers. Die Strömungskanäle werden von den Kanalwänden (4), beziehungsweise (5), begrenzt. In einer äußeren, an die Mantelfläche des Wabenkörpers anschließenden Randzone, die etwa 2 Lagen von Strömungskanälen umfaßt, sind die Kanalwände (5) gegenüber den Kanalwänden (4) im Inneren des Wabenkörpers verstärkt, um seine mechanische Stabilität zu erhöhen.

Für das erfindungsgemäße Befeuchten der Mantelfläche des Wabenkörpers vor dem Beschichten sind verschiedene Anordnungen möglich. Eine davon zeigt Figur 4. Der Wabenkörper wird vor einer Reihe von Spritzdüsen (8) um seine Mittelachse (6) gedreht. Die Spritzdüsen (8) werden durch ein gemeinsames Zuführungsrohr (7) mit Flüssigkeit versorgt. Auf diese Art und Weise kann die Mantelfläche (1) des Wabenkörpers mit einer definierten Flüssigkeitsmenge vorbelegt werden. Bei entsprechender Gestaltung der Spritzdüsen oder Versorgung der Spritzdüsen mit unterschiedlichen Mengen an Flüssigkeit können auf einfache Weise die oben beschriebenen stufen- oder gradientenförmigen Anfeuchtungen realisiert werden.

In sehr einfacher Weise kann das Befeuchten auch durch Abrollen eines nassen Schwammes oder Tuches am Mantel des Wabenkörpers erfolgen.

Alternative Methoden, die sich vor allem für die ungleichmäßige Befeuchtung von zentralen Bereichen des Wabenkörpers eignen, sind das Befeuchten mit einem Spritzstrahl von einer oder beiden Stirnflächen her. Die in den Kanälen sich eventuell ansammelnde überschüssige Flüssigkeit kann durch Ausblasen oder Absaugen entfernt und damit auch die Flüssigkeitsmenge - falls erwünscht - über die Länge des Wabenkörpers vergleichmäßigt werden.

Ebenso ist es möglich, bei entsprechender Abschirmung den Wabenkörper mit einem Flüssigkeitsnebel zu beaufschlagen, wobei der Flüssigkeitsnebel mit einem Trägergasstrom durch den Wabenkörper geleitet werden kann. Auf diese Weise wird eine inhomogene Verteilung der Beschichtungsdicke über die Länge des Wabenkörpers zugänglich. An Stelle von Flüssigkeitsnebeln können auch verdampfte Flüssigkeiten durch den Wabenkörper geführt werden, die an den kalten Kanalwänden des Wabenkörpers kondensieren.

## Patentansprüche

1. Verfahren zum Beschichten eines keramischen Wabenkörpers mit einer Suspension, welcher eine zylindrische Form mit einer ersten und einer zweiten Stirnfläche und einer Mantelfläche aufweist und der von einer Stirnfläche zur anderen von achsenparallelen Kanälen durchzogen ist, die von Kanalwänden gebildet werden und wobei das Beschichten des Wabenkörpers mit geeigneten Verfahren vorgenommen wird,
**dadurch gekennzeichnet,**
**dass** der Wabenkörper teilweise angefeuchtet und danach beschichtet wird.

2. Verfahren nach Anspruch 2,
**dadurch gekennzeichnet,**
**dass** die Mantelfläche des Wabenkörpers angefeuchtet wird.

3. Verfahren nach Anspruch 1 oder 2,
**dadurch gekennzeichnet,**
**dass** zwischen dem Anfeuchten und dem Beschichten des Wabenkörpers eine Wartezeit eingeschaltet wird.

4. Verfahren nach einem der vorstehenden Ansprüche,
**dadurch gekennzeichnet,**
**dass** zum Beschichten eine wässrige Suspension verwendet und die Anfeuchtung der Mantelfläche mit Wasser oder einer wässrigen Lösung vorgenommen wird.

5. Verfahren nach einem der vorstehenden Ansprüche,
**dadurch gekennzeichnet,**
**dass** die Dicke der Kanalwände des Wabenkörpers in einer von der Mantelfläche ins Innere des Wabenkörpers reichenden Randzone größer ist als im übrigen Teil des Wabenkörpers.

6. Verfahren nach Anspruch 1,
**dadurch gekennzeichnet,**
**dass** der Wabenkörper bereits mindestens eine Beschichtung aufweist.

7. Verfahren nach Anspruch 2 oder 6,
**dadurch gekennzeichnet,**
**dass** das Anfeuchten des Mantels durch Abrollen des Wabenkörpers vor einer Düse oder auf einem nassen Schwamm oder Tuch erfolgt.

8. Verfahren nach Anspruch 1 oder 6,
**dadurch gekennzeichnet,**
**dass** zum teilweisen Anfeuchten des Wabenkörpers die Anfeuchtungsflüssigkeit durch Hindurchspritzen oder Bespritzen, mit Hilfe von Flüssigkeitsnebeln oder durch Kondensation verdampfter Flüssigkeiten aufgebracht wird.

## Claims

1. Process for coating, with a suspension, a ceramic honeycomb body which has a cylindrical shape with a first and a second flat surface and a curved surface, and through which channels parallel to the axis, formed by channel walls, run from one flat surface to the other, the honeycomb body being coated by suitable processes, **characterized in that** the honeycomb body is partially wetted and then coated.

2. Process according to Claim 2, **characterized in that** the curved surface of the honeycomb body is wetted.

3. Process according to Claim 1 or 2, **characterized in that** a waiting time is introduced between the wetting and the coating of the honeycomb body.

4. Process according to one of the preceding claims, **characterized in that** coating is carried out using an aqueous suspension and the curved surface is wetted with water or an aqueous solution.

5. Process according to one of the preceding claims, **characterized in that** the thickness of the channel walls of the honeycomb body in a marginal zone extending from the curved surface into the interior of the honeycomb body is greater than in the remainder of the honeycomb body.

6. Process according to Claim 1, **characterized in that** the honeycomb body already has at least one coating.

7. Process according to Claim 2 or 6, **characterized in that** the curved surface is wetted by rotating the honeycomb body in front of a nozzle or rolling it over a wet sponge or cloth.

8. Process according to Claim 1 or 6, **characterized in that**, for partial wetting of the honeycomb body, the wetting liquid is applied by being sprayed through or over said honeycomb body with the aid of liquid aerosols or by the condensation of vaporized liquids.

## Revendications

1. Procédé pour le revêtement d'un corps céramique en nid d'abeille au moyen d'une suspension, ledit corps présentant une forme cylindrique avec une première et une deuxième face avant et une surface enveloppante et étant traversé d'une face avant à l'autre par des canaux parallèles à l'axe, qui sont formés par des parois de canal et le revêtement du corps en nid d'abeille étant réalisé par un procédé approprié, **caractérisé en ce que** le corps en nid d'abeille est partiellement humidifié, puis revêtu.

2. Procédé selon la revendication 2, **caractérisé en ce que** la surface enveloppante du corps en nid d'abeille est humidifiée.

3. Procédé selon la revendication 1 ou 2, **caractérisé en ce qu'**on intercale un temps d'attente entre l'humidification et le revêtement du corps en nid d'abeille.

4. Procédé selon l'une quelconque des revendications précédentes, **caractérisé en ce qu'**on utilise une suspension aqueuse pour le revêtement et que l'humidification de la surface enveloppante est réalisée avec de l'eau ou une solution aqueuse.

5. Procédé selon l'une quelconque des revendications précédentes, **caractérisé en ce que** l'épaisseur des parois de canaux du corps en nid d'abeille dans une zone périphérique s'étendant à partir de la surface enveloppante vers l'intérieur du corps en nid d'abeille est supérieure à celle dans le reste du corps en nid d'abeille.

6. Procédé selon la revendication 1, **caractérisé en ce que** le corps en nid d'abeille présente au moins un revêtement.

7. Procédé selon la revendication 2 ou 6, **caractérisé en ce que** l'humidification de la surface enveloppante est réalisée en faisant tourner le corps en nid d'abeille devant un pulvérisateur ou sur une éponge ou un drap humide.

8. Procédé selon la revendication 1 ou 2, **caractérisé en ce que**, pour l'humidification partielle du corps en nid d'abeille, le liquide d'humidification est appliqué par une pulvérisation à travers le corps, ou sur le corps, à l'aide de brouillards de liquides ou par condensation de liquides évaporés.
